# EUROPEAN PATENT SPECIFICATION

(11) **EP 0 544 918 B1**
(45) Date of publication and mention of the grant of the patent: **11.09.1996**
(21) Application number: 92912621.7
(22) Date of filing: 22.06.1992
(51) Int. Cl.: B60R 21/26

(54) **GAS GENERATOR OF THIN PLATE STRUCTURE**
GASGENERATOR MIT FEINBLECHSTRUKTUR
GENERATEUR DE GAZ A STRUCTURE EN TOLE MINCE

(30) Priority: 21.06.1991 JP 150336/91
(43) Date of publication of application: 09.06.1993
(73) Proprietor: DAICEL CHEMICAL INDUSTRIES, LTD., Sakai-shi Osaka-fu 590 (JP)
(72) Inventor: OGAWA, Akihisa, 268-8, Shimoyobe Yobe-ku, Hyogo 671-12 (JP); MURAMATSU, Osamu, 96-21, Toushincho 3-chome, Hyogo 671-11 (JP)
(74) Representative: Grünecker, Kinkeldey, Stockmair & Schwanhäusser Anwaltssozietät
(86) International application number: JP9200792
(87) International publication number: WO9300233

(56) References cited:
- FR-A- 2 625 961
- JP-A- 2 152 510
- JP-A- 3 128 744

## Description

The invention refers to a gas generator of a thin-walled structure having a central cylindrical holder in which a squib/enhancer is housed, a combustion chamber surrounding said holder and holding gas generants therein, a filter/coolant chamber formed annularly so as to surround said combustion chamber and adapted to allow the entry thereinto of a gas after having passed through openings communicating with said combustion chamber, and gas outlet ports formed at said filter/coolant chamber and through which the gas rushes into the airbag after having passed through a filter and a coolant, said combustion chamber being formed with a combustor cup having an annular top wall and a combustor plate to close said combustion chamber, and a diffuser providing said outlet ports in an extended portion of said diffuser and forming partially a double wall of said combustion chamber with said annular top wall of said combustor cup.

Such gas generators are known from the automotive industry and are used in airbags. As generally known, airbags are used as a safety device provided in a passenger car, so as to protect the driver from an impact occurring during a collision of the car. In case of the collision, a gas generator inflates the airbag in a very short period of time.

One such gas generator is disclosed in US patent No. 4902036, features of which form the preamble of claim 1. If the igniter is activated during a collision, the gas generators are activated and the generated gas passes through openings into the filter/coolant chamber and leaves the gas generator through openings to inflate the airbag. Since the airbag has to be inflated within fractions of a second, the pressure applied to the structure of the gas generator is very high, thus requiring a rigid structure of the gas generator. In the case of US patent No. 4902036, connecting the top and bottom sides of the gas generator with bolts is proposed, in order to avoid an undesired explosion thereof. Under abnormal conditions, such as being exposed to a fire, the gas generator is designed to fracture with the top and bottom sides still remaining secured proximate to each other. Moreover, this gas generator comprises a double wall faced against the occupant of the vehicle. However, such bolts increase the weight of the gas generator substantially and manufacturing becomes rather complex. In addition, keeping the size of the gas generator as small as possible is desired, since the generators are usually installed in the hub of a steering wheel, where space is very limited.

So far, various types of structures of a housing for forming a combustion chamber and a filter/coolant chamber in such a gas generator have been proposed.

For example, Japanese patent application No. 155857/1990 proposes a gas generator in which a combustion chamber is formed by a combination of a bottom cylindrical portion of the housing body and a cover member welded to an open part of this cylindrical portion so as to minimize the dimensions and weight of the gas generator.

Japanese patent application No. 152639/1980 discloses a gas generator of a thin-walled structure formed so as to reduce the weight of a casing in which a combustion chamber and a filter chamber are formed by a combination of a central cylinder in which an igniter is held, a cover, and an S-shaped casing, outlet ports of the filter chamber (expansion chamber) being made in the form of slits by punching an extended portion of the casing.

However, when any of these conventional gas generators of a thin-walled structure are incorporated into a steering wheel of an automobile, safety problems arise, since the wall of a housing of a combustion chamber which faces a driver consists of one thin plate. Moreover, there are disadvantages in assembling such gas generators.

It is an object of the present invention to provide a gas generator of a weight-reduced thin-walled structure having a housing of improved strength and which is advantageous with respect to assembly properties.

The object is achieved according to the invention by providing a gas generator which is characterized by said annular top wall of said combustor cup being fixed at an inner edge portion thereof to a circumferential edge of the top wall of said central cylindrical holder by riveting, said combustor plate being welded at an outer edge thereof to an inner edge portion of a flange at an outer circumference of said combustor cup, and at an inner edge thereof to an opposite edge portion of said holder, so as to close said combustion chamber, the diffuser being provided so as to cover said top wall of said central cylindrical holder and said annular top wall which continues therefrom of said combustor cup, whereby said double wall for said combustion chamber is formed, an extended portion of said diffuser and said flange at the outer circumference of said combustor cup forming said filter/coolant chamber, a free end portion of said flange at the outer circumference of said combustor cup being welded to the inner wall of said extended portion of said diffuser.

The gas generator according to the invention allows the provision of a thin-walled structure which is very rigid. At the same time, the production is facilitated.

In the gas generator according to the present invention, a circular plate constituting a diffuser is laminated on the annular top wall, which forms the outer surface on the side of the crew of an automobile of a combustion chamber, of a combustor cup to form a double wall of the combustion chamber. Therefore, the crew-side portion of the combustion chamber is doubly constructed, and an advantageous effect concerning the safety of the device is obtained. Since an expansion chamber (filter/coolant chamber) is formed by a combination of an extended portion the diffuser and a flange at the outer circumference of the combustor cup, press working can be utilized, so that this part can be produced more easily and more inexpensively than when the forging techniques are utilized. In order to form a housing of the gas generator according to the present invention, a central holder with a combustor plate (cover member) welded thereto and an outer circumferential portion of a combustor cup are welded to each other to form a combustion chamber, and gas generants are placed in this combustion chamber, an end portion of the combustor cup being then bent by press working and fastened to a head portion of a central holder by riveting so as to seal the gas generants, whereby the gas generants can be sealed by a non-welding method.

According to the housing structure of the present invention, the weight thereof can be reduced owing to the employment of a thin-walled structure of aluminum and the like, which can be produced by press working. Moreover, the gas generants can be sealed by a non-welding method. This enables an assembly line and the relative equipment to be simplified.

When the housing structure of the gas generator according to the present invention is employed, the following effects can be obtained.
(1) The crew-side portion of the combustion chamber is doubly formed, so that the gas generator is advantageous with respect to the safety thereof.
(2) Since the sealing of the gas generants can be done by a non-welding method, an assembly line and the relative equipment can be simplified.
(3) Owing to the thin-walled structure, the weight of the gas generator can be reduced, and, since the press working can be employed, this gas generator can be manufactured more efficiently and more inexpensively than a gas generator manufactured by forging techniques.

### [Brief Description of the Drawings]

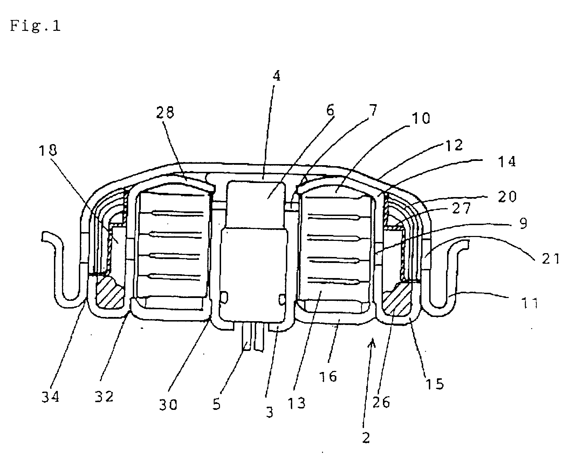

Fig. 1 is a schematic longitudinal section of an embodiment of the gas generator according to the present invention.

### [Detailed Description of the Preferred Embodiment]

The details of the present invention will now be described on the basis of an embodiment thereof shown in the drawing.

Fig. 1 is a sectioned side elevation of the gas generator according to the present invention for an air bag for protecting the crew of an automobile.

A gas generator 2 covered at its upper portion with a folded expansible air bag (not shown) cooperates with a collision sensor (not shown) to form a safety device for protecting the crew of an automobile, and this safety device is held in a steering wheel of an automobile.

The gas generator 2 has a central cylindrical holder 4 housing a squib/enhancer in the central portion thereof. After the squib/enhancer has been inserted in the holder 4, the lower end portion of the holder is caulked (shown by a reference numeral 3) and connected to a collision sensor through conductors 5. The inner circumferential edge of an annular combustor plate (cover member) 16 which forms a bottom wall of a combustion chamber 10 is welded to the circumferential edge of the lower end portion of the holder 4, and then the outer circumferential portion of an unprocessed cylindrical combustor cap 14 having an extended flange 15 at the lower end thereof to the outer circumferential edge of the combustor plate 16 to form the combustion chamber 10, in which a required number of disc type gas generants 13 are held in layers in advance. The upper end portion of the combustor cup 14 is then bent by press working and fastened to the head portion of the central holder 4 by riveting 28 to seal the gas generants. A disc type diffuser 12 having an extended portion 11 is laminated on the crew-side top walls of the central holder 4 and combustor cup 14 thus formed, so that the crew-side portion of the housing of the combustion chamber is doubly formed. The extended portion 11 of this diffuser 12 and a flange 15 at the outer circumference of the combustor cup 14 form a filter/coolant chamber (expansion chamber) 18 in which a filter and a coolant are provided, and the outer circumferential edge of the flange 15 is welded to the inner circumferential edge of the lower end portion of the downwardly suspended extended portion of the diffuser 12. A combustion gas produced from the gas generants 13 ignited by an igniter 6 in the holder 4 through the openings 7 provided in the circumferential wall of the holder flows into the expansion chamber 18 through a plurality of communication ports 9 provided in an annular side wall of the combustor cup 14, and passes through a coolant 26 and a filter 20 therein, and the resultant gas flows out through a plurality of gas outlet ports 21 provided in an outer side wall of the diffuser 12 into an air bag to expand the same instantaneously. A retainer 27 is provided between the coolant 26 and filter 20 so that a gas flow first impinging upon the coolant 26 then passes through the filter 20.

In the housing of the gas generator according to the present invention, the central cylindrical holder 4, combustor plate 16, combustor cup 14 and diffuser 12 are joined to one another via annular welding seams 30, 32, 34 by electron beam welding or laser beam welding, whereas the fixing of the top wall of the combustor cup to the central holder 4 after the completion of the insertion of the gas generants 13 into the combustor cup 14 is done by riveting 28.

## Claims

1. A gas generator of a thin-walled structure, having a central cylindrical holder (4) in which a squib/enhancer is housed, a combustion chamber (10) surrounding said holder (4) and holding gas generants (13) therein, a filter/coolant chamber (18) formed annularly so as to surround said combustion chamber (10) and adapted to allow the entry thereinto of a gas after having passed through openings (9) thereof communicating with said combustion chamber (10), and gas outlet ports (21) formed at said filter/coolant chamber (18) and through which the gas rushes into the airbag after having passed through a filter (20) and a coolant (26), said combustion chamber (10) being formed with a combustor cup (14) having an annular top wall, and a combustor plate (16) to close said combustion chamber, having an annular top wall and a diffuser (12), providing said outlet ports (21) in an extended portion of said diffuser (12), and forming partially a double wall of said combustion chamber with said annular top wall of said combustor cup, **characterized by**
said annular top wall of said combustor cup (14) being fixed at an inner edge portion thereof to a circumferential edge of the top wall of said central cylindrical holder (4) by riveting (28), said combustor plate (16) being welded at an outer edge (32) thereof to an inner edge portion of a flange (15) at an outer circumference of said combustor cup (14), and at an inner edge (30) thereof to an opposite edge portion of said holder (4), so as to close said combustion chamber (10), the diffuser (12) being provided so as to cover said top wall of said central cylindrical holder and said annular top wall which continues therefrom of said combustor cup (14), whereby said double wall for said combustion chamber (10) is formed, an extended portion of said diffuser (12) and said flange (15) at the outer circumference of said combustor cup (14) forming said filter/coolant chamber, a free end portion of said flange (15) at the outer circumference of said combustor cup (14) being welded to the inner wall (34) of said extended portion of said diffuser (12).

## Patentansprüche

1. Ein Gaserzeuger von dünnwandiger Struktur, mit einem zentralen zylindrischem Halter (4), in dem ein Zünder/Auslöser aufgenommen ist, einer Brennkammer (10), die den Halter (4) umgibt und in der Gaserzeugungseinrichtungen (13) gehalten sind, einer Filterungs-/Kühlungskammer (18), die ringförmig ausgebildet ist, um die Brennkammer (10) zu umgeben und daran angepaßt ist, den Eintritt eines Gases darin hinein zu erlauben, nachdem es durch Öffnungen (9) davon hindurchgetreten ist, die mit der Brennkammer (10) kommunizieren, und Gasauslaßöffnungen (21), die in der Filterungs-/Kühlungskammer (18) eingeformt sind und durch welche das Gas in den Airbag (Luftsack) strömt, nachdem es durch einen Filter (20) und ein Kühlmittel (26) hindurchgetreten ist, wobei die Brennkammer (10) gebildet wird aus einer Brennschale (14), die eine ringförmige obere Wand aufweist, und einer Brennplatte (16) zum Verschließen der Brennkammer, die eine ringförmige obere Wand und einen Diffusor (12) aufweist, der die Auslaßöffnungen (21) in einem verlängerten Abschnitt des Diffusors (12) aufweist, und teilweise eine doppelte Wand der Brennkammer mit der ringförmigen oberen Wand der Brennschale bildet,
**dadurch gekennzeichnet,**
daß die ringförmige obere Wand der Brennschale (14) an einem inneren Kantenabschnitt davon an einer Umfangskante der oberen Wand des zentralen zylindrischen Halters (4) durch Vernieten (28) befestigt ist, wobei die Brennplatte (16) an einer äußeren Kante (32) davon mit einem inneren Kantenabschnitt eines Flansches (15) an einem äußeren Umfang der Brennschale (14), und an einer inneren Kante (30) davon mit einem gegenüberliegenden Abschnitt des Halters (4) verschweißt ist, um die Brennkammer (10) zu verschließen, wobei der Diffusor (12) vorgesehen ist, um die obere Wand des zentralen zylindrischen Halters und die ringförmige obere Wand, die sich von da aus von der Brennschale (14) aus erstreckt, abzudecken, wobei die Doppelwand für die Brennkammer (10) gebildet wird, ein verlängerter Abschnitt des Diffusors (12) und der Flansch (15) am äußeren Umfang der Brennkammer (14) die Filterungs-/Kühlungskammer bilden, ein freier Endabschnitt des Flansches (15) am äußeren Umfang der Brennschale (14) mit der inneren Wand (34) des vorstehenden Abschnittes des Diffusors (12) verschweißt ist.

## Revendications

1. Générateur de gaz à structure à paroi mince, comprenant un support cylindrique central (4), dans lequel un élément d'amorçage/renforcement est logé, une chambre de combustion (10), entourant le support (4) et maintenant intérieurement des éléments générateurs de gaz (13), une chambre (18) pour filtre/agent de refroidissement, de forme annulaire de façon à entourer la chambre de combustion (10) et agencée de manière à permettre qu'un gaz y pénètre après avoir traversé des ouvertures (9) de cette chambre pour filtre/produit de refroidissement qui communiquent avec la chambre de combustion (10), et des orifices de sortie de gaz (21) qui sont formés sur la chambre (18) pour filtre/produit de refroidissement et à travers lesquels le gaz pénètre brusquement dans un sac gonflable après avoir traversé un filtre (20) et un produit de refroidissement (26), la chambre de combustion (10) étant formée d'une cuvette de chambre de combustion (14), comportant une paroi supérieure annulaire, et d'une plaque de chambre de combustion (16) servant à fermer la chambre de combustion, comportant une paroi supérieure annulaire et un diffuseur (12), présentant les orifices de sortie (21) dans une partie de prolongement du diffuseur (12), et formant partiellement une double paroi de la chambre de combustion avec la paroi supérieure annulaire de la cuvette de chambre de combustion, caractérisé en ce que la paroi supérieure annulaire de la cuvette de chambre de combustion (14) est fixée, à l'endroit d'une partie de bord intérieur de cette paroi, sur un bord circonférentiel de la paroi supérieure du support cylindrique central (4) par sertissage (28), en ce que la plaque de chambre de combustion (16) est soudée, à l'endroit d'un bord extérieur (32) de cette plaque, à une partie de bord intérieur d'un rebord (15) situé à l'endroit d'une circonférence extérieure de la cuvette de chambre de combustion (14) et, à l'endroit d'un bord intérieur (30) de cette plaque, à une partie de bord opposé du support (4), de façon à fermer la chambre de combustion (10), et en ce que le diffuseur (12) est prévu de façon à recouvrir la paroi supérieure du support cylindrique central et ladite paroi supérieure annulaire de la cuvette de chambre de combustion (14) qui s'étend à partir de cette paroi supérieure du support, ce qui forme ladite double paroi prévue pour la chambre de combustion (10), tandis qu'une partie de prolongement du diffuseur (12) et le rebord (15) situé à l'endroit de la circonférence extérieure de la cuvette de chambre de combustion (14) forment la chambre pour filtre/produit de refroidissement et qu'une partie d'extrémité libre du rebord (15) situé à l'endroit de la circonférence extérieure de la cuvette de chambre de combustion (14) est soudée à la paroi intérieure (34) de la partie de prolongement du diffuseur (12).
